# EUROPEAN PATENT SPECIFICATION

(11) **EP 1 139 835 B1**
(45) Date of publication and mention of the grant of the patent: **18.06.2003**
(21) Application number: 99962424.0
(22) Date of filing: 22.12.1999
(51) Int. Cl.: A47J 39/00, A47F 3/04

(54) **A HEATED FOOD STORAGE AND DISPLAY CABINET**
BEHEIZTER SCHRANK ZUR PRÄSENTATION UND LAGERUNG VON LEBENSMITTELN
MEUBLE DE PRESENTATION ET DE STOCKAGE D'ALIMENTS

(30) Priority: 22.12.1998 GB 9828505
(43) Date of publication of application: 10.10.2001
(73) Proprietor: Alan Nuttall Limited, Hinckley, Leicestershire LE10 3BZ (GB)
(72) Inventor: NUTTALL, Alan David, Copston Magna, Leicestershire (GB); STEELE, Michael James, Leicestershire LE9 4LF (GB)
(74) Representative: Gray, James
(86) International application number: GB9904379
(87) International publication number: WO00036958

(56) References cited:
- FR-A- 2 346 989
- GB-A- 1 207 726
- US-A- 4 089 322
- US-A- 4 478 047

## Description

The invention relates to a heated food storage and display cabinet and is primarily concerned with a heated food storage and display cabinet for use in supermarkets.

Changes in working patterns have led to changes in eating habits particularly with respect to what might be called the traditional evening meal where a family sits around a table and eats home-cooked food. It is now becoming increasingly commonplace for convenience meals to be eaten in the evening while watching television from an easy chair. That has, in turn, led to an increase in take-away food outlets where a person can collect a hot ready- cooked meal to eat at home. For some time, supermarkets have offered a range of prepared food which can be taken home, heated or cooked, and then eaten. However, there is now increasing competition from take-away food outlets which supermarkets would like to address by supplying hot ready-cooked meals themselves. One of the problems faced by supermarkets is how to keep such food hot whilst making it readily accessible to customers and an object of the present invention is to provide a cabinet which will be suitable for such a purpose.

In US-A-3,942,426 there is described a heated sandwich bin with air curtains. The bin is not intended for display of packaged heated food which customers select and take away but is intended for use by fast food outlets where sandwiches need to be kept hot without spoiling so that those who are serving food to a customer can do so quickly. The bin has heated air curtains at front and rear ends open. Whilst some of the air diffuses inwardly of the bin, the air does not actually flow over the sandwiches themselves to avoid drying them out. One object of the present invention is to provided a heated food storage cabinet which enables air to flow over packs of food.

Attempts have been made to provide open fronted refrigerated food display cabinets which use an air curtains to help prevent cooled air escaping through the open front. Whilst the present invention is not concerned with food refrigeration, examples of refrigerated cabinets can be seen in US-A-2,993,349 and US-A-5,755,108. In US-A-2,993,349, an open fronted refrigerated display cabinet has an upwardly open-fronted flue at its rear and a blower for moving air over a refrigerating unit and upwardly through the flue. A second blower is provided at the upper end of the cabinet which draws air upwards through the flue and directs it downwards as a curtain across the open front of the cabinet and towards an air inlet at the bottom of the cabinet for recirculation. The open front of the flue does not, however, guarantee that a sufficient amount of cooled air will reach the food stored at the top of the cabinet or that the flow of air will be reasonably even throughout. Moreover, any food overhanging the back of the shelves so as to project into the cabinet will interfere with upset the flow of air along the flue. Moreover, a flow path to the second blower does not encourage air to flow over food at the upper end of the cabinet.

US-A-5,755,108 similarly provides an upward flow of cooled air at the rear of the cabinet and a curtain of air across an open front. Whilst in this case the problem of an open fronted flue does not exist, the construction is rather complex. For example, the upward flow of cooled air for circulation within the cabinet relies either upon the way in which air from a single outlet in the base of the cabinet can flow through a gap behind the lowest shelf or it is necessary to provide two completely separate air flow channels at the rear of the cabinet, one exclusively for air to be used as the air curtain and the other exclusively for supplying air for cooling food in the cabinet. In the former case, any food projecting across the gap behind the shelf will upset air flow to the remainder of the cabinet and, in the latter case, the need to provide two air flow channels takes up space thereby decreasing the amount of space available for food storage and makes manufacturing more complex. Moreover, as in US-A-2,993,349, the flow path to a blower at the upper end of the cabinet used to produce the air curtain does not encourage air to flow over food at the upper end of the cabinet.

According to the invention there is provided a heated food storage and display cabinet as defined in claim 1.

The flow of air from the outlets provided over a substantial length of the duct provides an even distribution of heated air over food packs which will normally be placed on shelving in the chamber. As the duct is enclosed, there is no likelihood of food packs projecting into the duct and blocking air flow in the duct. Also, as the second flow inducing means draws air at least partly from the upper end of the cabinet, the air moving towards the second flow inducing means will tend to flow over food packs at the upper end which leads to efficient use of the heated air.

Such a cabinet is particularly good for storing hot take-away food as a customer can simply reach through the air curtain directed across the open front, pick up the food, and then remove the food from the cabinet. The effective use of an air curtain avoids the need to provide a door on the cabinet which needs to be opened and closed and is advantageous in that respect. Also, the use of air to keep the food heated is much better than supporting the food on shelves in the form of hot plates as the heat is more evenly distributed over the food. Also, hot plates require the use of heating elements to keep them hot making them difficult to relocate in a cabinet.

The upper end of the duct may be closed to encourage air to flow through the outlets and into the chamber.

An air collection zone may be provided at the upper end of the chamber in which air may accumulate. Air from the chamber preferably enters the air collection zone through a plurality of apertures. The air may both enter and leave the collection zone via the apertures. The air collection zone provides an accumulation of heated air which can re-enter the chamber and be used by the flow-inducing means in the formation of the air curtain.

The air directed across the front of the chamber is preferably directed towards a collection zone for recirculation. The collection zone preferably comprises a recirculation inlet at the bottom of the chamber. Preferably, a shield is provided for preventing food in the cabinet from blocking the recirculation inlet. The shield may be provided on a shelf positioned at the lower end of the chamber.

Conveniently, the aforesaid heater means may be arranged in a base or lower part of the cabinet. In such a case, the heater means may be arranged immediately upstream of the duct. Similarly, the first flow inducing means may be arranged in a base or lower part of the cabinet. The flow inducing means is preferably arranged upstream of the heater means. Where the aforesaid collection zone is provided, the flow inducing means preferably receives the air from that zone for recirculation.

The duct may be partly defined by a perforated wall, the perforations forming the said outlets. The perforated wall preferably defines a closure wall of the chamber.

Deflection means such as one or more baffles may be provided for controlling flow of air from the outlets into the chamber. Such baffles help to ensure efficient flow of air over food packs in the chamber.

The cabinet may have an openable door to enable food to be placed in the cabinet initially and to enable staff to refill the cabinet. The door may be arranged in a rear wall of the cabinet.

At least part of the aforesaid duct may be arranged in the door and, in such a case, a wall which has the openable door therein may also define part of the duct.

A cover may be provided for blocking an exposed part of the duct in the wall when the door is open so that air does not blow from the exposed part of the duct on to a person refilling the cabinet. Also, the use of the cover prevents objects accidentally being dropped into the duct when the cabinet is being refilled. The cover may be arranged to block the duct automatically when the door is opened, for example, it may be operated by transmission means such as gearing. The cover may be pivotally mounted for rotational movement from an open to a closed position as the door is opened. When the door is open, the heating means should be switched off, preferably automatically on opening of the door. Also the first flow inducing means should be switched off when the door is open, preferably automatically on opening of the door. Where the first flow inducing means is switched off when opening the door, the momentum thereof will cause air to continue moving through the duct for a short period. However, the use of the aforesaid cover prevents the air blowing on to the person refilling the cabinet. An audible/visual warning may be provided when the door is opened to remind the staff to close the door after refilling the cabinet.

Shelves are preferably arranged in the chamber for supporting the food. The shelves may be inclined towards the open front for ease of access. For ease of air circulation around the food, the shelving may comprise a mesh or the like. The shelves may be made from or may be coated with a insulative material such as plastics.

Duct means may be provided for ducting the air to the chamber. The duct means may comprise a passageway in a wall of the cabinet, preferably the rear wall thereof. The passageway may have a wall thereof formed by a wall of the chamber, such as the rear wall thereof.

If desired, a refrigeration unit may be arranged adjacent the cabinet, means being provided for directing warm air created by the refrigeration unit into the cabinet, for example to be heated further by the heater means. All of the warm air created by the refrigeration unit may be directed to the cabinet. The heated air from the refrigeration unit may supplement or comprise the air used in the cabinet. In a preferred embodiment, the cabinet and refrigeration unit may be arranged back-to-back. An air flow controller may be arranged to control flow between the refrigeration unit and the cabinet.

A heated food storage and display cabinet in accordance with the invention will now be described by way of example with reference to the accompanying drawings in which:
Fig 1 is a perspective front view of one form of heated food storage and display cabinet in accordance with the invention,
Fig 2 is a vertical cross-section through the cabinet shown in Fig 1 on line II-II in Fig 1,
Fig 3 is a vertical cross section similar to Fig 2 showing another form of heated food storage and display cabinet in accordance with the invention and having an openable door,
Fig 4 is a diagrammatic cross-section showing part of the door in a modified version of Fig 3 and showing a duct cover in an open position when the door is closed and
Fig 5 is a diagrammatic perspective view of the duct cover of Fig 4 showing the way in which it covers the duct when the door is an open position.

A cabinet 10 comprises a bottom wall 12, side walls 14, a rear wall 16 and a top wall 18. The bottom wall 12 supports an upwardly extending front wall 19 and lower front and side panels 20, 22 respectively which carry a rubber bumper 24 to protect against damage by supermarket trolleys. The front wall 19 has a double glazed see-through panel 26 mounted at its upper end. The panel 26 and extends upwardly towards a downwardly extending front canopy panel 28 carried by the top wall 18. The cabinet 10 is mounted on a base 30 having castors 32 for ease of manoeuvring the cabinet into position on the floor, say, of a supermarket.

The cabinet 10 defines a food storage chamber 34 between the walls 12, 14, 16, 18, 19, 20, 22 having and open front 35. A metal skin 36 formed with a multiplicity of perforations 38 is spaced inwardly of the rear wall 16, the rear wall 16 being imperforate. The skin 36 closes the rear of the chamber 34 and extends widthwise for the full width of the chamber and downwards to the bottom wall 12. The space between the skin 36 and the rear wall 16 forms an air duct 41, the sides of which are closed by the side walls 14. The skin 36 carries vertically spaced baffles 42, the baffles being inclined downwardly, with respect to the skin 36 at a suitable angle, for example 45 degrees. The baffles 42 extend for substantially the full width of the skin 36.

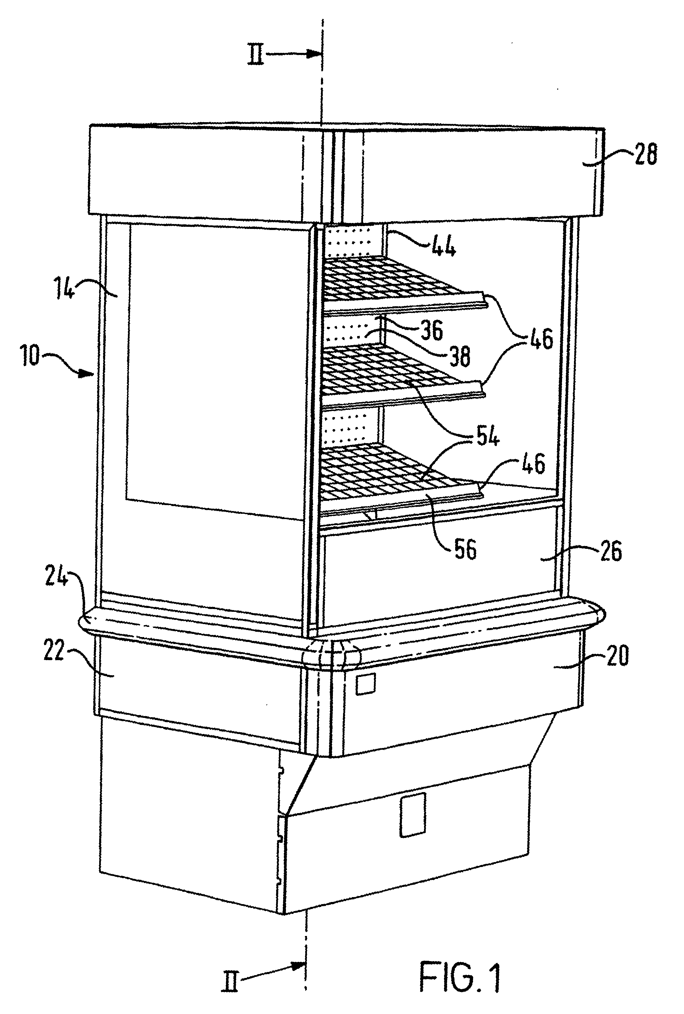

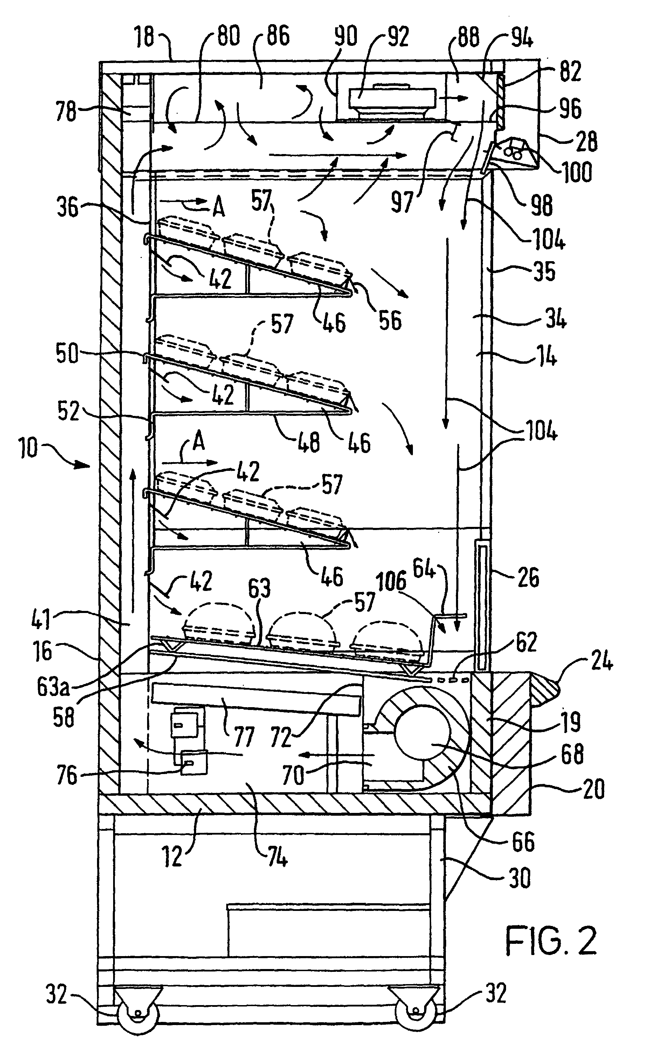

The cabinet has slotted uprights 44 (one only of which is shown in Fig 1) at rear corners of the chamber 34 which support shelving, three shelves 46 being illustrated in the present example. Each shelf 46 has two wire end supports 48. Each wire support 48 is triangular and has spaced apart upper and lower left hand ends 50, 52. The upper end 50 hooks into a selected slot in one of the uprights 44 and the lower end 52 locates in a slot beneath. In that way, each wire support 48 is rigidly located on the uprights 44. A mesh shelf surface 54 is then mounted on the end supports 48. Each mesh shelf surface 54 is provided with an upstanding projection 56 at its front end as shown clearly in Fig 2 to help retain packs 57 of food on the shelves 46 as shown in broken lines. The mesh shelf surfaces 54 are inclined downwardly for ease of access.

The chamber 34 has a inclined floor 58 spaced from the bottom wall 12 of the cabinet. The floor 58 extends between the skin 36 and a position spaced from the top of the front wall 19. A perforated metal sheet 62 extends across the space between the front wall 19 and the floor 58. A shelf 63 having feet 63a stands on the floor 58. The front of the shelf 63 is bent to form an upstanding shield 64 which projects across the perforated metal sheet 62 as is apparent from Fig 2. Suitably mounted in the cabinet 10 beneath the floor 58 is a blower in the form a suitable air pump 66 having an inlet 68 and an outlet 70. The inlet 68 is positioned in front of a divider 72 extending between the side walls 14 and between the bottom wall 12 and floor 58. The outlet 70 directs air into a heating zone 74 to the rear of the divider 72.

Electrical heating elements 76 are carried on a mounting 77 suitably supported in the heating zone 74.

Looking at the upper end of the cabinet 10, the duct 41 has a closure 78 at its upper end and a perforated metal sheet 80 extends from one side wall 14 to the other and from the cross member skin 36 adjacent the closure 78 to a front cross member 82. The front cross member 82 extends between the side walls 14 and may be constructed from an insulating material. An area between the perforated sheet 80 and the wall 18 is divided into two compartments 86, 88 by a sheet metal mounting 90 which carries a blower in the form of a suitable fan 92. A baffle 94 extends between the cross member 82 and wall 18 at an angle of approximately 45 degrees and is intended to direct air towards an outlet 96 extending for the full width of the chamber 34 and formed by one or more apertures such as slots in the metal sheet 80. A guide fin 97 projects downwardly from the sheet 80 adjacent the outlet 96. A further guide fin 98 of translucent material extends downwardly from panel 82 adjacent the outlet 96. The guide fins 97 extend for the full width of the chamber 34 and it will be noted that they are inclined to the vertical and are substantially parallel. A strip light fitting 100 is mounted between the canopy panel 28 and the front cross-member 82 adjacent the guide fin 98. The translucence of the guide fin 98 ensures that the guide fin 98 will not cast a shadow from the light 100 onto food in the chamber.

The operation of the cabinet 10 will now be described.

With electric power switched on to the pump 66, the heating elements 76 and the fan 92, the pump 68 draws air through the front perforated sheet 62 and into the inlet 68. The air is then blown by the pump 66 through the outlet 70, over the heating elements 76, through the perforations 38 in the adjacent part of the perforated skin 36 and into the air duct 41. The heated air is driven upwards through the duct 41 and as the upper end of the duct has the closure 78, the heated air is forced through the perforations 38 in the front skin 36 of the door 26 and into the chamber 34 as indicated by the arrows A in Fig 2. The baffles 42 help to deflect the heated air downwardly and encourage flow of air around the food packs 57 on the shelves 46, 63. The operation of the fan 92 draws some of the air near the top of the chamber 34 upwards (thereby encouraging air flow at the top of the chamber beneficial for maintaining the temperature of food packs 57 on the top shelf) and through perforations in the sheet 80 which are immediately beneath the fan. The fan 92 forces that air into the compartment 88 and through the outlet 96. The air driven through the outlet 96 and past the fins 97, 98 is forced downwards and slightly inwards by virtue of the inclination of the fins 97, 98. The air entering the compartment 34 through the perforations 38 in the skin 36 has a component of outward movement towards the open front of the chamber 34. The inward direction of flow of the air from outlet 96 and the outward movement of the air from the perforations 38 results in a resultant substantially vertical downwardly moving air curtain 104 across the open front 35 of the chamber 34. Persons requiring a pack 57 of hot food can simply reach through the air curtain 104, pick up a pack of food and then remove the pack from the cabinet 10.

The air forming the air curtain 104 flows downwards towards a collection zone 106 adjacent the perforated front metal sheet 62 where it is joined by air which has flowed over the food packs 57 in the chamber 34. The continued operation of the pump 66 draws the air from the collection zone 106 through the front perforated sheet 62 and into the inlet 68 for recirculation. The shield 64 on the shelf 63 ensures that food packs 57 on the shelf 63 cannot slip forward and cover the perforated sheet 62.

The use of the air curtain 104 helps to retain in the chamber 34 the heated air which passes over the food packs 57 from the duct 41. In that way, heated air is retained in the chamber 34. Also, when a customer reaches through the air curtain, the flowing air 104 forms a seal around the wrist of the customer minimising the escape of air from the chamber 34 as a food pack is being removed.

It will be noted that the perforations 38 in the skin 36 extend for substantially the full length and width of the duct 41. In that way, a good supply of heated air over all the shelves 46, 63 of the cabinet 10 can be achieved keeping the food packs 57 evenly heated throughout the cabinet.

The compartment 86 above the perforated sheet 80 at the top of the compartment 34 serves as a collection zone for heated air which enters the compartment by convection through the perforated sheet 80. Air in the collection zone tends to trickle out back through the perforations and is drawn through the fan 92 with other air from the upper end of the chamber 34. The air which accumulates in the chamber 88 serves to provide a source of heated air for the curtain for a brief period if, for some reason, there is a short interruption of heated air from the duct 41. For example, in order to effect an efficient heat exchange between the air and the heating elements 76, the pump may be programmed to operate so that air is delivered to the heating zone 74 in pulses of, say, 10 seconds duration at intervals of say 3 seconds.

The heating elements 76 can be arranged to heat the air to the desired temperature and a thermostat arrangement may be provided for heat control. The air may be heated to temperatures in the range of 80 to 120 degrees Centigrade.

A display may be provided on or adjacent the top of the front panel 20 if desired.

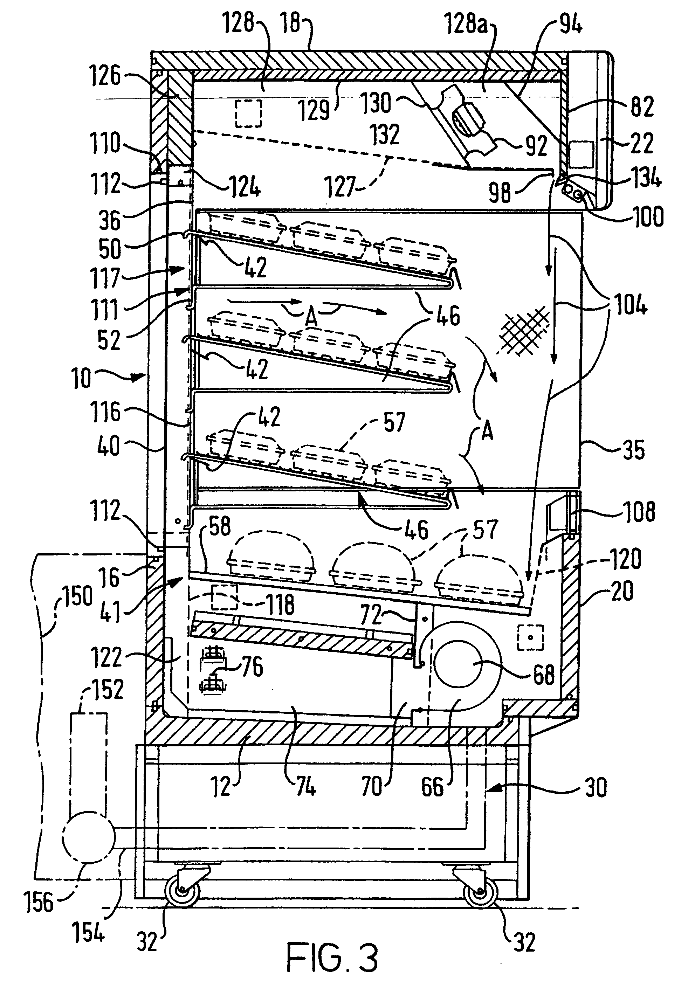

Reference is now made to Fig 3. In many respects the cabinet shown in Fig 3 is similar to the cabinet described with reference to Figs 1 and 2 and only the differences will be described. In Fig 3, parts corresponding to parts in Figs 1 and 2 carry the same reference numerals.

In Fig 3, the rear wall 16 is formed with an opening 110 which gives access to the rear of the shelves 46 in the chamber. A door 111 is mounted on upper and lower side hinges 112 carried by the rear wall 16 and can be opened and closed to open and close the opening 110.

The door 111 is double skinned. A front skin of the door 111 is formed by a perforated panel 116 and a rear skin is imperforate. A space between the perforated panel 116 and the rear skin defines part 117 of the duct 41 which is open at the top and bottom. The front skin carries baffles which incline downwardly as in Fig 2 but the angle of inclination increases the nearer the baffles are to the top of the perforated panel 116.

A floor 58 extends between an upstanding perforated rear metal sheet 118 and a perforated front metal sheet 120 extending over a collection zone 106. The rear metal sheet 118 extends from one side wall 14 to the other upwardly from the bottom wall 12 and is spaced from the rear wall 16 so as to define an open-topped further part 122 of the duct 41 in alignment with the part 117 of the duct 41 in the door 111. Suitably mounted in the cabinet 10 beneath the floor 58 is an air pump 66 having an inlet 68 and an outlet 70. The inlet 68 is positioned in front of a divider 72 extending between the side walls 14 and between the bottom wall 12 and floor 58. The outlet 70 directs air into a heating zone 74 to the rear of the divider 72. Electrical heating elements 76 are suitable mounted in the heating zone 74.

Looking at the upper end of the cabinet 10, a short double skinned section 124 is mounted on a cross member 126 extending between the side walls 14, the cross member 126 closing the section 124 at its upper end. A perforated metal sheet 127 extends from one side wall 14 to the other and from the cross member 126 to a front cross member 82. A panel 129 of insulating material is also mounted on the underside of the top wall 18. An area between the perforated metal sheet 127 and the plate 129 is divided into two compartments 128, 128a by a metal sheet 130 which carries a fan 92. A baffle 94 extends between the cross member 82 and panel 129 at an angle of approximately 45 degrees and is intended to direct air towards an outlet 96 formed by one or more slots in the metal sheet 80. A guide fin 97 projects downwardly from the sheet 127 adjacent the outlet 96. A portion 132 of the metal sheet 127 between the cross member 78 and the divider sheet 90 is perforated.

A strip light fitting 100 is mounted between the canopy wall 22 and the front cross-member 82 and a front guide fin 134 is provided at the back of the light fitting 100 which is inclined to the vertical to impart an inward movement to the air which passes through the outlet 96 similar to that described with respect to Figs 1 and 2.

The operation of the cabinet shown in Fig 3 will now be described.

With electric power switched on to the pump 66, the heating elements 76 and the fan 92, the pump 68 draws air through the front perforated sheet 120 and into the inlet 68. The air is then blown by the pump 66 through the outlet 70, over the heating elements 76, through the perforated sheet 118 and into the part 122 of duct 41. The heated air is driven upwards through the duct part and into the part 117 of the duct 41 defined in the closed door 111. The heated air is forced through the perforations 38 in the perforated panel 116 forming the front skin of the door 111 and into the chamber 34 as indicated by the arrows A. The baffles 42 help to deflect the heated air downwardly and encourage flow of air around the food packs 57 on the shelves 46. The operation of the fan 92 draws some of the air at the top of the chamber 34 through the perforations in portion 132 of the sheet 128 and into the compartment 127. The fan 92 forces that air into the compartment 128 and through the outlet 96. The air driven through the outlet 96 and past the fin 98 is forced downwards and slightly inwards similar to the cabinet shown in Figs 1 and 2 and as shown by arrows to form an air curtain 104 across the open front 35 of the chamber 34. Persons requiring a pack 57 of hot food can simply reach through the air curtain 104, pick up a pack of food and then remove the pack from the cabinet 10.

The front wall 20 does not carry a see through panel as in Figs 1 and 2 but carries a display panel 108 at its upper end. The operation of the cabinet 10 will now be described.

In order to fill the shelves 46 with food packs 57 and to replenish the shelves without having to do so from the front of the cabinet, the door 111 can be swung open rearwardly about the hinges 112 and closed again afterwards. An audible and/or visible alarm may be provided to indicate to an operator that the door has been opened. The use of the alarm acts as a reminder to the operator to close the door 111 again.

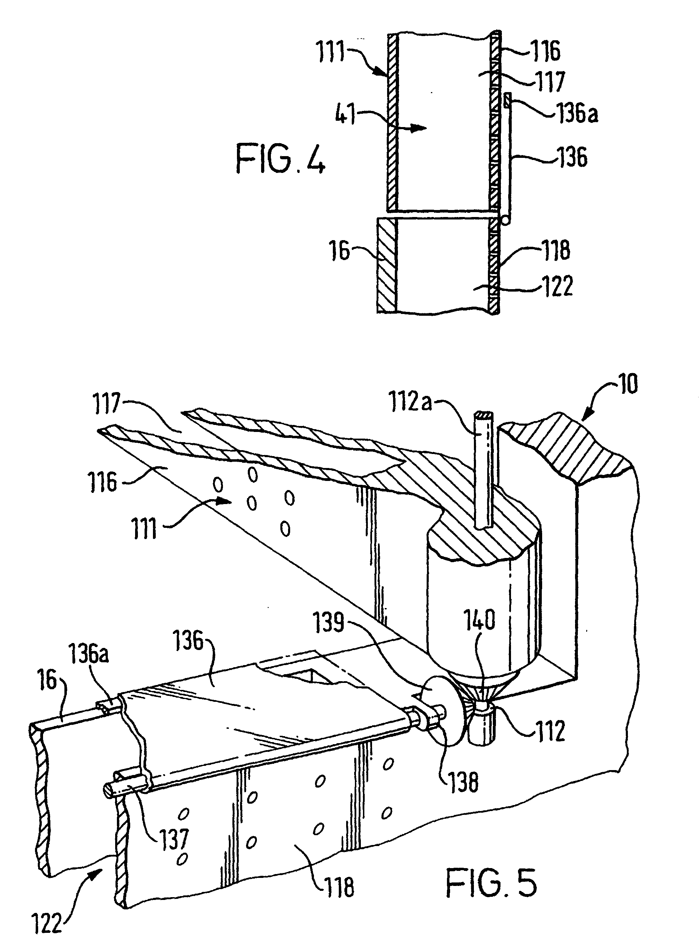

On opening the door 111 as the door 111 is opened, a switch or switches (not shown) may be operated automatically so as to switch off the supply of electricity to the heating elements 76 and to the pump 66. The parts 117 and 122 of the duct 41 will no longer be in alignment and air pumped in to the part 122 of duct 41 as the pump 66 slows down and the heating elements cool could escape through its open upper end and blow on to an operative. To prevent that a cover 136 may be provided which can be used to cover the upper end of the duct 64 when the door 26 is swung open. Such a cover 136 is shown in Figs 4 and 5. In Fig 5 the cover 136 is shown broken away. The cabinet 10 of Fig 3 is modified by repositioning the hinges 112 on the inside of the cabinet as shown in Fig 5. The cover 136 comprises a rectangular metal sheet fixed to a shaft 137 which is rotatably mounted on spaced apart brackets 138 (one only of which is shown) on the inside of the cabinet 10. The metal sheet forming the cover 136 has a sealing strip 136a along its free edge. An end of the shaft 137 adjacent the lower hinge 112 is drivably connected to a bevel gear 139. The bevel gear 139 which meshes with a bevel gear 140 fixed to a hinge shaft 112a which is drivably connected to the door 111. As the door is moved towards its open position as shown in Fig 5, the bevel gear 140 moves with the door and transmits drive to the shaft 137 so as to move the cover 136 downwardly from the Fig 4 position to the Fig 5 position in which it covers the complete upper end of part 122 of the duct 41. Once the door 111 is closed again, the supply of electricity is switched on again to drive the pump 66 and heat the elements 76. Preferably, the bevel gears 139, 140 will be suitably encased to render them inaccessible to persons taking food packs 57 via the open front of the cabinet 10. The use of the cover 136 also prevents objects accidentally being dropped into the part 122 of the duct 41 when the cabinet 10 is being refilled.

Although a single door 111 is shown, a double door arrangement may be provided so that each door is substantially half the width of the door 111. In such a case, a bevel gear arrangement can be provided adjacent the lower hinge 112 for each door 111.

It should be appreciated that the cabinet shown in Figs 1 and 2 can be modified so as to have an open rear door or doors 112 similar to that shown in Figs 3 or Figs 4 and 5.

As shown in Fig 3, the cabinet 10 may be arranged back-to-back with a refrigeration unit 150 indicated diagrammatically in broken lines and shown partly broken away. As is well known, a refrigeration unit 150 gives off heat extracted from within the refrigerator itself. In the present case, the heat given off is transferred to air in a heat exchanger 152 or other suitable means and ducting 154 is provided to enable to heated air to enter the cabinet 10 upstream of the pump 66. The air from the refrigeration unit 150 supplements or provides the air which is circulated through the cabinet 10. The flow of air from the refrigeration unit 150 can be controlled by a flow controller 156.

## Claims

1. A heated food storage and display cabinet (10) comprising an open fronted enclosed chamber (34) in which packs of food (57) can be stored, an upwardly extending air duct (41) enclosed between walls (14, 16, 36) of the cabinet (10), one (36) of which walls forms a closure for the chamber (34) opposite the open front (35), the closure wall (36) being formed with a plurality of outlets (38) over a substantial length of the duct (41) leading from the duct (41) to the chamber (34), a first flow inducing means (66) for directing air upwardly through the duct (41) and a second flow inducing means (92) for producing a curtain of air (104) which is directed across the open front (35) of the chamber (34), and heater means (76), the first flow inducing means (66) causing the air to pass over the heater means (76) and into the duct through which it is driven upwards and forced through the outlets (38) and into the chamber (34) and the second flow inducing means (92) being arranged to draw air from the upper end of the chamber (34) which has entered the chamber (34) through the outlets (38) in the closure wall (36) and use it in the formation of an air curtain (104) across the open front of the chamber.

2. A heated food cabinet according to claim 1 in which the upper end of the duct (41) is closed to encourage air to flow through the outlets (33) and into chamber.

3. A heated food cabinet according to claim 1 or claim 2 in which an air collection zone (86; 128) is provided at the upper end of the chamber (34) in which air can accumulate.

4. A heated food cabinet according to any preceding claim in which the air (104) directed across the front of the chamber (34) is directed towards a collection zone (106) for recirculation.

5. A heated food cabinet according to claim 4 in which the collection zone (106) comprises a recirculation inlet at a bottom of the chamber (34).

6. A heated food cabinet according to claim 5 in which a shield (64) is provided for preventing food packs (57) in the chamber (34) from blocking the recirculation inlet.

7. A heated food cabinet according to claim 6 in which the shield (64) is provided on a shelf (63) positioned at the lower end of the chamber (34).

8. A heated food cabinet according to any preceding claim in which the heater means (76) is arranged in a base or lower part of the cabinet (34).

9. A heated food cabinet according to claim 8 in which the heater means (76) is arranged immediately upstream of the duct (41).

10. A heated food cabinet according to any preceding claim in which the first flow inducing means (66) may be arranged in a base or lower part of the cabinet (34).

11. A heated food cabinet according to any preceding claim in which the first flow inducing means (66) is arranged upstream of the heater means (76).

12. A heated food cabinet according to any preceding claim in which deflection means (42) such as one or more baffles are provided for controlling flow of air from the outlets (38) into the chamber (34).

13. A heated food cabinet according to any preceding claim in which the cabinet (10) has an openable door (111) to enable food (57) to be placed in the cabinet (10) initially and to enable staff to refill the cabinet.

14. A heated food cabinet according to claim 13 in which at least part of the said duct (41) is to be arranged in the door.

15. A heated food cabinet according to claim 1 to 12 in which the cabinet (10) has an openable door (111) at the rear of the cabinet (10) which forms a closure for the chamber (34) opposite the open front (35) and in which at least part of the said duct (41) is defined, the openable door (111) enabling food packs to be placed in the cabinet other than through the open front, and having a front side (116) formed with some of said outlets (38).

16. A heated food cabinet according to claim 14 or 15 in which a wall (16) of the cabinet (10) which has the openable door (111) therein defines part of the duct (41).

17. A heated food cabinet according to claim 16 in which a cover (136) is provided for blocking an exposed part of the duct (41) in the wall (16) when the door (111) is open so that air does not blow from the exposed part of the duct (41) on to a person refilling the cabinet (10).

18. A heated food cabinet according to claim 17 in which the cover (136) is arranged to block the duct (41) automatically preferably by transmission means (139, 140) such as gearing.

19. A heated food cabinet according to claim 17 or 18 in which the cover (136) is pivotally mounted for rotational movement from an open to a closed position as the door (111) is opened.

20. A heated food cabinet according to claim 17, 18 or 19 in which means is provided for switching off the heating means (76) and/or the first flow inducing means (66) when the door (111) is open, the switch means preferably operating automatically as the door (111) is opened.

21. A heated food cabinet according to any of claims 14 to 20 in which an audible/visual warning may be provided when the door (111) is opened to remind the staff to close the door (111) after refilling the cabinet (10).

22. A heated food cabinet according to any preceding claim in which duct means (154) is provided for ducting the air to the cabinet (10) from means (152) for pre-heating the air.

23. A heated food cabinet according to claim 22 in which a refrigeration unit (150) is arranged adjacent the cabinet (10), means (152, 156) being provided for directing warm air created by the refrigeration unit (150) into the cabinet (10) through the duct means (154) to be heated further by the heater means (76).

## Patentansprüche

1. Beheizter Schrank (10) zur Lagerung und Präsentation von Lebensmitteln
- mit einer frontseitig offenen umschlossenen Kammer (34), in der Lebensmittelpackungen (57) gelagert werden können,
- mit einem sich nach oben erstreckenden Luftkanal (41), der zwischen Wänden (11, 16, 36) des Schranks (10) eingeschlossen ist,
- wobei eine (36) dieser Wände einen der offenen Front (35) gegenüberliegenden Abschluss für die Kammer (34) bildet,
- wobei die Abschlusswand (36) mit einer Vielzahl von Auslässen (38) über eine wesentliche Länge des Kanals (41) versehen ist, die von dem Kanal (41) zu der Kammer (34) führen,
- mit einer ersten eine Strömung erzeugenden Einrichtung (66) zum Leiten von Luft nach oben durch den Kanal (41),
- mit einer zweiten, eine Strömung erzeugenden Einrichtung (92) zur Erzeugung eines Luftvorhangs (104), der quer über die offene Front (35) der Kammer (34) gerichtet ist, und
- mit einer Heizeinrichtung (76),
- wobei die erste eine Strömung erzeugende Einrichtung (66) die Luft dazu bringt, über die Heizeinrichtung (76) in den Kanal zu strömen, durch den sie nach oben getrieben und durch die Auslässe (38) in die Kammer (34) zwangsweise geführt wird, und
- wobei die zweite eine Strömung erzeugende Einrichtung (92) so angeordnet ist, dass Luft, die in die Kammer (34) durch die Auslässe (38) in der Abschlusswand (36) eingetreten ist, vom oberen Ende der Kammer (34) abgezogen und zur Bildung des Luftvorhangs (104) quer über die offene Front der Kammer verwendet wird.

2. Beheizter Lebensmittelschrank nach Anspruch 1, bei welchem das obere Ende des Kanals (41) geschlossen ist, um die Luft zum Strömen durch die Auslässe (38) und in die Kammer zu veranlassen.

3. Beheizter Lebensmittelschrank nach Anspruch 1 oder Anspruch 2, bei welchem am oberen Ende der Kammer (34) eine Luftsammelzone (86, 128) vorgesehen ist, in der sich Luft ansammeln kann.

4. Beheizter Lebensmittelschrank nach einem vorhergehenden Anspruch, bei welchem die Luft (104), die quer über die Front der Kammer (34) gerichtet ist, zu einer Sammelzone (106) für eine Umwälzung geführt wird.

5. Beheizter Lebensmittelschrank nach Anspruch 4, bei welchem die Sammelzone (106) einen Umwälzeinlass an einem Boden der Kammer (34) aufweist.

6. Beheizter Lebensmittelschrank nach Anspruch 5, bei welchem eine Abschirmung (64) vorgesehen ist, die verhindert, dass Lebensmittelpackungen (57) in der Kammer (34) den Umwälzeinlass versperren.

7. Beheizter Lebensmittelschrank nach Anspruch 6, bei welchem die Abschirmung (64) an einem Fachbrett (63) vorgesehen ist, das am unteren Ende der Kammer (34) angeordnet ist.

8. Beheizter Lebensmittelschrank nach einem vorhergehenden Anspruch, bei welchem die Heizeinrichtung (76) in einer Basis oder in einem unteren Teil des Schranks (34) angeordnet ist.

9. Beheizter Lebensmittelschrank nach Anspruch 8, bei welchem die Heizeinrichtung (76) unmittelbar stromauf von dem Kanal (41) angeordnet ist.

10. Beheizter Lebensmittelschrank nach einem vorhergehenden Anspruch, bei welchem die erste eine Strömung erzeugende Einrichtung (66) in einer Basis oder in einem unteren Teil des Schranks (34) angeordnet werden kann.

11. Beheizter Lebensmittelschrank nach einem vorhergehenden Anspruch, bei welchem die erste eine Strömung erzeugende Einrichtung (66) stromauf von der Heizeinrichtung (76) angeordnet ist.

12. Beheizter Lebensmittelschrank nach einem vorhergehenden Anspruch, bei welchem eine Ablenkeinrichtung (42), beispielsweise eine oder mehrere Leitwände, zur Steuerung des Stroms der Luft von den Auslässen (38) in die Kammer (34) vorgesehen ist.

13. Beheizter Lebensmittelschrank nach einem vorhergehenden Anspruch, bei welchem der Schrank (10) eine aufmachbare Tür (111) hat, damit Lebensmittel (54) anfänglich in dem Schrank (10) platziert werden können und der Schrank vom Personal nachgefüllt werden kann.

14. Beheizter Lebensmittelschrank nach Anspruch 13, bei welchem wenigstens ein Teil des Kanals (41) in der Tür angeordnet ist.

15. Beheizter Lebensmittelschrank nach Anspruch 1 bis 12, bei welchem der Schrank (10) eine aufmachbare Tür (111) auf der Rückseite des Schranks (10) hat, die einen der offenen Front (35) gegenüberliegenden Abschluss für die Kammer (34) bildet und in der wenigstens ein Teil des Kanals (41) ausgebildet ist, wobei die aufmachbare Tür (111) es ermöglicht, dass Lebensmittelpackungen in dem Schrank auf andere Weise als durch die offene Front platziert werden können und die Tür (111) eine Frontseite (116) hat, die mit einigen der Auslässe (38) versehen ist.

16. Beheizter Lebensmittelschrank nach Anspruch 14 oder 15, bei welchem eine Wand (16) des Schranks (10), in der sich die aufmachbare Tür (111) befindet, einen Teil des Kanals (41) bildet.

17. Beheizter Lebensmittelschrank nach Anspruch 16, bei welchem eine Abdeckung (136) vorgesehen ist, um einen freiliegenden Teil des Kanals (41) in der Wand (16) zu versperren, wenn die Tür (111) offen ist, so dass aus dem freiliegenden Teil des Kanals (41) keine Luft auf eine den Schrank (10) nachfüllende Person geblasen wird.

18. Beheizter Lebensmittelschrank nach Anspruch 17, bei welchem die Abdeckung (136) angeordnet ist, um den Kanal (41) automatisch vorzugsweise durch eine Getriebeeinrichtung (139, 140), beispielsweise eine Räderverzahnung, zu versperren.

19. Beheizter Lebensmittelschrank nach Anspruch 17 oder 18, bei welchem die Abdeckung (136) schwenkbar für eine Drehbewegung aus einer Offenstellung in eine Schließstellung angebracht ist, wenn die Tür (111) geöffnet ist.

20. Beheizter Lebensmittelschrank nach Anspruch 17, 18 oder 19, bei welchem Einrichtungen vorgesehen sind, um die Heizeinrichtung (76) und/oder die erste eine Strömung erzeugende Einrichtung (66) abzuschalten, wenn die Tür (111) offen ist, wobei die Schalteinrichtung vorzugsweise automatisch arbeitet, wenn die Tür (111) geöffnet ist.

21. Beheizter Lebensmittelschrank nach einem der Ansprüche 14 bis 20, bei welchem ein hörbarer / visueller Alarm vorgesehen werden kann, wenn die Tür (111) geöffnet ist, um das Personal an das Schließen der Tür (111) nach dem Wiederbefüllen des Schranks (10) zu erinnern.

22. Beheizter Lebensmittelschrank nach einem vorhergehenden Anspruch, bei welchem eine Kanaleinrichtung (154) vorgesehen ist, um die Luft von Einrichtungen (152) zur Vorwärmung der Luft zum Schrank (10) zu leiten.

23. Beheizter Lebensmittelschrank nach Anspruch 22, bei welchem eine Kühleinheit (150) angrenzend an den Schrank (10) angeordnet ist, wobei Einrichtungen (152, 156) vorgesehen sind, die von der Kühleinheit (150) erzeugte Warmluft durch die Kanaleinrichtung (154) für ein weiteres Erwärmen durch die Heizeinrichtung (76) in den Schrank (10) leiten.

## Revendications

1. Meuble de présentation et de stockage d'aliments chauffés (10) comprenant une chambre fermée (34) ouverte à l'avant dans laquelle peuvent être stockés des aliments emballés (57), un conduit d'air (41) se prolongeant vers le haut enfermé entre des parois (14,16,36) du meuble (10), l'une (36) de ces parois forme une fermeture pour la chambre (34) en regard de la face ouverte (35), la paroi de fermeture (36) comportant une pluralité de sorties (38) sur une longueur substantielle du conduit (41) menant du conduit (41) à la chambre (34), un premier moyen d'induction d'écoulement (66) pour diriger de l'air vers le haut par le conduit (41) et un second moyen d'induction d'écoulement (92) pour produire un rideau d'air (104) qui est dirigé à travers la face ouverte (35) de la chambre (34), et un moyen de chauffage (76), le premier moyen d'induction d'écoulement (66) faisant passer l'air sur le moyen de chauffage (76) et dans le conduit à travers lequel il est entraîné vers le haut et il est forcé à travers les sorties (38) et dans la chambre (34), et le second moyen d'induction d'écoulement (92) étant disposé pour aspirer depuis l'extrémité supérieure de la chambre (34) l'air qui est entré dans la chambre (34) à travers les sorties (38) de la paroi de fermeture (36) et pour l'utiliser pour former un rideau d'air (104) devant la face ouverte de la chambre.

2. Meuble pour aliments chauffés selon la revendication 1, dans lequel l'extrémité supérieure du conduit (41) est fermée pour encourager l'air à s'écouler à travers les sorties (33) et dans la chambre.

3. Meuble pour aliments chauffés selon la revendication 1 ou la revendication 2 dans lequel est prévue à l'extrémité supérieure de la chambre (34) une zone de collecte d'air (86 ;128) dans laquelle l'air peut s'accumuler.

4. Meuble pour aliments chauffés selon l'une quelconque des revendications précédentes, dans lequel l'air (104) dirigé devant la face avant de la chambre (34) est envoyé vers une zone de collecte (106) pour sa recirculation.

5. Meuble pour aliments chauffés selon la revendication 4, dans lequel la zone de collecte (106) comprend à la partie inférieure de la chambre (34) une entrée de recirculation.

6. Meuble pour aliments chauffés selon la revendication 5, dans lequel un écran (64) est prévu pour empêcher des aliments emballés (57), présents dans la chambre (34), de bloquer l'entrée de recirculation.

7. Meuble pour aliments chauffés selon la revendication 6, dans lequel l'écran (64) est prévu sur un plateau (63) placé à l'extrémité inférieure de la chambre (34).

8. Meuble pour aliments chauffés selon l'une quelconque des revendications précédentes, dans lequel le moyen de chauffage (76) est disposé dans une base ou partie inférieure du meuble (34).

9. Meuble pour aliments chauffés selon la revendication 8, dans lequel le moyen de chauffage (76) est disposé immédiatement en amont du conduit (41).

10. Meuble pour aliments chauffés selon l'une quelconque des revendications précédentes, dans lequel le premier moyen d'induction d'écoulement (66) peut être disposé dans une base ou une partie inférieure du meuble (34).

11. Meuble pour aliments chauffés selon l'une quelconque des revendications précédentes, dans lequel le premier moyen d'induction d'écoulement (66) est disposé en amont du moyen de chauffage (76).

12. Meuble pour aliments chauffés selon l'une quelconque des revendications précédentes, dans lequel un moyen de déflection (42) tel qu'un ou plusieurs déflecteurs est prévu pour contrôler l'écoulement d'air depuis les sorties (38) jusque dans la chambre (34).

13. Meuble pour aliments chauffés selon l'une quelconque des revendications précédentes, dans lequel le meuble (10) comprend une porte ouvrante (111) pour permettre de placer initialement des aliments (57) dans le meuble (10) et pour permettre au personnel de remplir à nouveau le meuble.

14. Meuble pour aliments chauffés selon la revendication 13, dans lequel une partie au moins du dit conduit (41) est disposé dans la porte.

15. Meuble pour aliments chauffés selon l'une des revendications 1 à 12, dans lequel le meuble (10) comporte à sa partie arrière une porte ouvrante (111) qui constitue pour la chambre (34) une fermeture opposée à la face ouverte (35) et dans laquelle est déterminée une partie au moins du dit conduit (41), la porte ouvrante (111) permettant de placer des aliments emballés dans le meuble d'une autre façon qu'à travers la face ouverte, et ayant une face avant (116) qui est formée avec quelques dites ouvertures (38).

16. Meuble pour aliments chauffés selon la revendication 14 ou 15, dans lequel une paroi (16) du meuble (10) dans laquelle est ménagée la porte ouvrante (111), détermine une partie du conduit (41).

17. Meuble pour aliments chauffés selon la revendication 16, dans lequel est prévu un couvercle (136) pour obstruer une partie exposée du conduit (41) dans la paroi (16) quand la porte (111) est ouverte, de façon que de l'air ne soit pas soufflé depuis la partie exposée du conduit (41) sur une personne occupée à remplir à nouveau le meuble (10).

18. Meuble pour aliments chauffés selon la revendication 17, dans lequel le couvercle (136) est conçu pour obstruer automatiquement le conduit (41), de préférence par un moyen de transmission (139,140) tel qu'un engrenage.

19. Meuble pour aliments chauffés selon la revendication 17 ou 18, dans lequel le couvercle (136) est monté de façon pivotante pour effectuer un mouvement de rotation depuis une position ouverte vers une position fermée lorsqu'on ouvre la porte (111).

20. Meuble pour aliments chauffés selon la revendication 17,18 ou 19, dans lequel est prévu un moyen pour éteindre le moyen de chauffage (76) et/ou le premier moyen d'induction d'écoulement (66) lorsque la porte (111) est ouverte, le dit moyen servant à éteindre fonctionnant de préférence automatiquement lorsqu'on ouvre la porte (111).

21. Meuble pour aliments chauffés selon l'une quelconque des revendications 14 à 20, dans lequel peut être prévu un avertisseur sonore/visuel agissant quand la porte (111) est ouverte, pour rappeler au personnel de refermer la porte (111) après avoir rempli à nouveau le meuble (10).

22. Meuble pour aliments chauffés selon l'une quelconque des revendications précédentes, dans lequel est prévu un conduit (154) pour amener de l'air vers le meuble (10) depuis un moyen (152) de préchauffage de l'air.

23. Meuble pour aliments chauffés selon la revendication 22, dans lequel un ensemble de réfrigération (150) est disposé de façon adjacente au meuble (10), un moyen (152, 156) étant prévu pour diriger de l'air tiède, créé par l'élément de réfrigération (150), dans le meuble (10) en passant par le conduit (154) pour le chauffer de façon supplémentaire par le moyen de chauffage (76).
